# EUROPÄISCHE PATENTANMELDUNG

(11) **EP 2 031 001 A1**
(43) Veröffentlichungstag der Anmeldung: **04.03.2009**
(21) Anmeldenummer: 07115438.9
(22) Anmeldetag: 31.08.2007
(51) Int. Cl.: C08G 18/10, C08K 5/5419, C09J 5/02, C09J 5/06, C09J 175/04, C08G 18/12

(54) **Verwendung einer Heissschmelzklebstoffzusammensetzung als Primer**

(71) Anmelder: Sika Technology AG, 6340 Baar (CH)
(72) Erfinder: Huck, Wolf-Rüdiger, 8044, Zürich (CH); Braun, Andreas, 8954 Geroldswill (CH)
(74) Vertreter: Sika Patent Attorneys

(57) **Zusammenfassung**

Die vorliegende Erfindung betrifft die Verwendung von Heissschmelzklebstoffzusammensetzungen, enthaltend mindestens ein Isocyanatgruppen und/oder Silangruppen aufweisendes Polyurethanpolymer, als Primer für Klebstoffe oder Dichtstoffe oder als Primer für Zusammensetzungen zur Herstellung von Beschichtungen. Derartige Primer eignen sich insbesondere für feuchtigkeitshärtende Polyurethanzusammensetzungen und weisen den Vorteil auf, dass sie VOC-frei oder zumindest VOC-arm sind.

## Beschreibung

### Technisches Gebiet

Die Erfindung betrifft das Gebiet der Primer, welche frei sind von flüchtigen organischen Verbindungen.

### Stand der Technik

Primer werden seit langem als Voranstriche eingesetzt, um die Haftung von Klebstoffen, Dichtstoffen, und Beschichtungen auf dem Untergrund zu verbessern. Typischerweise enthalten sie neben einem Bindemittel Silane, Titanate und/oder Zirkonate als Haftvermittler.
Zur erleichterten dünnschichtigen Auftragung der Primer, weisen diese üblicherweise grosse Mengen, das heisst im Bereich > 70 Gew.-%, an Lösungsmitteln, insbesondere an flüchtigen organischen Verbindungen, so genannten VOC's (Volatile Organic Compounds), auf. Sowohl aus ökologischen Gründen als auch aus Gründen der Sicherheit und der Gesundheit ist es vermehrt von Vorteil, VOC-freie oder zumindest VOC-arme Primer einzusetzen.
Neben den ökologischen, gesundheitlichen und sicherheitstechnischen Nachteilen der VOC enthaltenden Primer, weisen diese einen weiteren Nachteil darin auf, dass für ihre korrekte Anwendung eine Ablüftzeit eingehalten werden muss. Diese Abluftzeit hängt vom eingesetzten Lösungsmittel und von der Umgebungstemperatur bei der Applikation ab und kann in der Regel von etwa 10 Minuten bis zu mehr als 24 Stunden betragen.

### Darstellung der Erfindung

Die Aufgabe der vorliegenden Erfindung ist es daher, einen Primer für Klebstoffe oder Dichtstoffe oder für Zusammensetzungen zur Herstellung von Beschichtungen zur Verfügung zu stellen, welcher den Stand der Technik überwindet und VOC-frei oder zumindest VOC-arm ist.

Erfindungsgemäss wird dies durch die Merkmale des ersten Anspruchs erreicht. Überraschenderweise wurde gefunden, dass die Verwendung von Heissschmelzklebstoffzusammensetzungen, enthaltend mindestens ein Isocyanatgruppen aufweisendes und/oder Silangruppen aufweisendes Polyurethanpolymer, als VOC-freier oder zumindest VOC-armer Primer für Klebstoffe oder Dichtstoffe oder für Zusammensetzungen zur Herstellung von Beschichtungen sehr gute Haftungsresultate liefert.

Der Vorteil der vorliegenden Erfindung ist unter anderem, dass Heissschmelzklebstoffzusammensetzungen grösstenteils frei sind von flüchtigen organischen Verbindungen und somit ihre Verwendung als Primer aus ökologischer, gesundheitlicher und sicherheitstechnischer Sicht, aber auch betreffend den Haftungsresultaten eine Verbesserung eines grossen Teils derzeitig eingesetzter Primer-Systeme darstellt.
Ein weiterer Vorteil der Verwendung von Heissschmelzklebstoffzusammensetzungen als Primer ist, dass dadurch, dass sie keine flüchtigen organischen Lösungsmittel enthalten, auch keine Ablüftzeit beim applizierten Primer eingehalten werden muss. Dies erleichtert die Anwendung solcher Primer in den Fällen, wo der Klebstoff, Dichtstoff oder die Beschichtung unmittelbar nach der Applikation des Primers aufgetragen werden soll. Unter diesen Umständen zeichnet sich ein weiterer Vorteil der Verwendung einer Heissschmelzklebstoffzusammensetzung als Primer dadurch aus, dass durch die Abkühlung des Primers unter seine Applikationstemperatur bereits vor der chemischen Vernetzung eine physikalische Versteifung eintritt, welche dem Haftverbund eine gewisse Anfangsfestigkeit verleiht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt die Verwendung einer Heissschmelzklebstoffzusammensetzung, enthaltend mindestens ein Isocyanatgruppen aufweisendes und/oder Silangruppen aufweisendes Polyurethanpolymer, als Primer für Klebstoffe oder Dichtstoffe oder als Primer für Zusammensetzungen zur Herstellung von Beschichtungen.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen wie beispielsweise Additionen oder Substitutionen von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Der Begriff "Organosilan" bezeichnet im vorliegenden Dokument Silane, welche mindestens eine Alkoxy- oder eine Acyloxygruppe sowie mindestens einen organischen Rest aufweisen, welcher über eine Si-C-Bindung an das Siliziumatom gebunden ist und gegebenenfalls funktionelle Gruppen mit Heteroatomen wie Amino- oder Mercaptogruppen aufweist. Als "Aminosilane" beziehungsweise "Mercaptosilane" werden Organosilane bezeichnet, deren organischer Rest eine Aminogruppe oder eine Mercaptogruppe aufweist. "Tetraalkoxysilane" stellen gemäss dieser Definition keine Organosilane dar.

Unter "flüchtigen organischen Verbindungen", auch VOC ("Volatile Organic Compounds") genannt, werden im vorliegenden Dokument organische Verbindungen verstanden, welche einen Siedepunkt von kleiner als 250°C bei Normdruck oder einen Dampfdruck von grösser als 0.1mbar bei 20°C besitzen.
Als "Raumtemperatur" wird eine Temperatur von 23 °C bezeichnet.

Die Heissschmelzklebstoffzusammensetzung umfasst mindestens ein bei Raumtemperatur festes, Isocyanatgruppen und/oder Silangruppen aufweisendes Polyurethanpolymer. Insbesondere umfasst die Heissschmelzklebstoffzusammensetzung mindestens ein Isocyanatgruppen aufweisendes Polyurethanpolymer, bevorzugt ein Isocyanatgruppen terminiertes Polyurethanpolymer.
Ein geeignetes Isocyanatgruppen aufweisendes Polyurethanpolymer **P** ist erhältlich durch die Umsetzung von mindestens einem Polyol mit mindestens einem Polyisocyanat.
Als Polyole geeignet sind insbesondere Polyetherpolyole, Polyesterpolyole und Polycarbonatpolyole sowie Mischungen dieser Polyole.

Als Polyetherpolyole, auch Polyoxyalkylenpolyole genannt, sind insbesondere jene geeignet, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder mehreren aktiven H-Atomen wie beispielsweise Wasser, Ammoniak oder Verbindungen mit zwei oder mehreren OH- oder NH-Gruppen, wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Die Polyoxyalkylendiole können unterschiedliche Ungesättigtheitsgrade (gemessen nach ASTM D-2849-69 und angegeben in Milliäquivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt.
Insbesondere geeignet sind Polyoxyalkylendiole oder Polyoxyalkylentriole mit einem Ungesättigtheitsgrad ≤ 0.02 mEq/g und mit einem Molekulargewicht im Bereich von 1000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Insbesondere geeignet sind Polyoxypropylendiole mit einem Ungesättigtheitsgrad ≤ 0.02 mEq/g und einem Molekulargewicht im Bereich von 1000 bis 12'000 g/mol, bevorzugt von 1000 bis 8000 g/mol. Derartige Polyetherpolyole sind beispielsweise unter dem Handelsnamen Acclaim^{®} von der Firma Bayer MaterialScience AG, Deutschland, kommerziell erhältlich. Unter "Molekulargewicht" versteht man im vorliegenden Dokument das Molekulargewichtsmittel Mn.
Ebenfalls besonders geeignet sind so genannte Ethylenoxid-terminierte ("EO-endcapped", ethylene oxide endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.
Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.
Die Polyesterpolyole weisen vorteilhaft ein Molekulargewicht von 1000 bis 15'000 g/mol, insbesondere von 1500 bis 8000 g/mol, bevorzugt von 1700 bis 5500 g/mol, auf.
Insbesondere geeignet sind bei Raumtemperatur flüssige, amorphe, teilkristalline und kristalline Polyesterdi- und -triole, insbesondere Polyesterdiole. Geeignete bei Raumtemperatur flüssige Polyesterpolyole sind nicht weit unterhalb von Raumtemperatur fest, beispielsweise bei Temperaturen zwischen 0 °C und 25 °C, und werden vorzugsweise in Kombination mit mindestens einem amorphen, teilkristallinen oder kristallinen Polyesterpolyol eingesetzt. Besonders geeignet sind amorphe Polyesterdiole sowie Mischungen aus amorphen und bei Raumtemperatur flüssigen Polyesterdiolen.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Als Polyole bevorzugt sind Polyesterpolyole und Polycarbonatpolyole, insbesondere Polyesterdiole und Polycarbonatdiole. Besonders bevorzugt sind amorphe Polyesterdiole und amorphe Polycarbonatdiole, sowie Mischungen aus amorphen und bei Raumtemperatur flüssigen Polyester- oder Polycarbonatdiolen. Am meisten bevorzugt sind Polyesterdiole, insbesondere amorphe Polyesterdiole, sowie Mischungen aus amorphen und bei Raumtemperatur flüssigen Polyesterdiolen.

Als Polyisocyanate für die Herstellung eines Polyurethanpolymers **P** können handelsübliche aliphatische, cycloaliphatische oder aromatische Polyisocyanate, insbesondere Diisocyanate, verwendet werden.
Geeignete Diisocyanate sind beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und Cyclohexan-1,4-diisocyanat und beliebige Gemische dieser Isomeren, 1-Methyl-2,4- und 1-Methyl-2,6-diisocyanatocyclohexan und beliebige Gemische dieser Isomeren (HTDI oder H₆TDI), 1-Isocyanato-3,3,5-trimethyl-5-isocyanatomethyl-cyclohexan (= Isophorondiisocyanat oder IPDI), Perhydro-2,4'- und Perhydro-4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und p-Tetramethyl-1,4-xylylendiisocyanat (mund p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI) sowie polymeres Diphenylmethandiisocyanat (PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate sowie beliebige Mischungen der vorgenannten Isocyanate. Bevorzugt sind MDI, TDI, HDI und IPDI. Besonders bevorzugt sind MDI und IPDI.

Die Herstellung des Polyurethanpolymers **P** erfolgt in bekannter Art und Weise direkt aus den Polyisocyanaten und den Polyolen oder durch schrittweise Adduktionsverfahren, wie sie auch als Kettenverlängerungsreaktionen bekannt sind.
In einer bevorzugten Ausführungsform wird das Polyurethanpolymer **P** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 2.5, insbesondere 1.5 bis 2.2, so dass ein Isocyanatgruppen aufweisendes Polyurethanpolymer **P** entsteht.

Ein geeignetes Silangruppen aufweisendes Polyurethanpolymer ist beispielsweise erhältlich aus der Umsetzung eines wie vorhergehend beschriebenen, Isocyanatgruppen aufweisenden Polyurethanpolymer **P** mit einem Hydroxylgruppen, Aminogruppen oder Mercaptogruppen aufweisenden Organosilan.
Ein weiteres Verfahren zur Herstellung eines geeigneten Silangruppen terminierten Polyurethanpolymers ist beispielsweise die Umsetzung eines Hydroxyl- oder Aminogruppen terminierten Polyurethanpolymers mit einem Isocyanatgruppen aufweisenden Organosilan.

Ein geeignetes Polyurethanpolymer, welches sowohl Isocyanatgruppen als auch Silangruppen umfasst, ist beispielsweise erhältlich aus der Umsetzung eines wie vorhergehend beschriebenen, Isocyanatgruppen aufweisenden Polyurethanpolymer P mit einem Hydroxylgruppen, Aminogruppen oder Mercaptogruppen aufweisenden Organosilan, wobei dieses so eingesetzt wird, dass seine Hydroxylgruppen, Aminogruppen oder Mercaptogruppen gegenüber den Isocyanatgruppen des Polyurethanpolymers **P** unterstöchiometrisch vorliegen.

Das Polyurethanpolymer ist bei Raumtemperatur fest. Es kann dabei kristallin, teilkristallin oder amorph sein. Für ein teilkristallines oder amorphes Polyurethanpolymer gilt dabei, dass es bei Raumtemperatur nicht oder nur wenig fliessfähig ist, das heisst insbesondere, dass es bei 20 °C eine Viskosität von mehr als 5'000 Pa.s aufweist.

Das Polyurethanpolymer weist ein Molekulargewicht von vorzugsweise über 1000 g/mol, insbesondere ein solches zwischen 1200 und 50'000 g/mol, bevorzugt ein solches zwischen 2000 und 30'000 g/mol, auf.
Weiterhin weist das Polyurethanpolymer bevorzugt eine mittlere NCO- bzw. Silan-Funktionalität im Bereich von 1.8 bis 2.2 auf.

Üblicherweise ist das Polyurethanpolymer in einer Menge von 40 bis 100 Gew.-%, insbesondere von 75 bis 100 Gew.-%, bevorzugt von 80 bis 100 Gew.-%, bezogen auf das Gesamtgewicht der Heissschmelzklebstoffzusammensetzung, vorhanden.

Insbesondere weist die für die erfindungsgemässe Verwendung beschriebene Heissschmelzklebstoffzusammensetzung weniger als 5 Gew.-%, insbesondere 0 bis 2 Gew.-%, bevorzugt 0 bis 1 Gew.-%, meist bevorzugt 0 Gew.-%, jeweils bezogen auf das Gesamtgewicht der Heissschmelzklebstoffzusammensetzung, an flüchtigen organischen Verbindungen auf.

Die vorgängig beschriebene Heissschmelzklebstoffzusammensetzung enthält gegebenenfalls weitere Bestandteile, wie sie üblicherweise in Heissschmelzklebstoffzusammensetzungen eingesetzt werden. Dem Fachmann ist dabei klar, dass solche weiteren Bestandteile in Abhängigkeit der jeweiligen Zusammensetzung und in ihrer Art und Menge so zu wählen sind, dass die Lagerstabilität der Zusammensetzung nicht beeinträchtigt wird.

Gegebenenfalls enthält die vorgängig beschriebene Heissschmelzklebstoffzusammensetzung nichtreaktive thermoplastische Polymere wie beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat. Besonders geeignet sind Ethylenvinylacetat-Copolymere (EVA), ataktische Poly-α-Olefine (APAO), Polypropylene (PP) und Polyethylene (PE).
Gegebenenfalls enthält die beschriebene Heissschmelzklebstoffzusammensetzung Katalysatoren für die Reaktion der Isocyanatgruppen wie Metallverbindungen oder tertiäre Amine.
Geeignete Metallverbindungen sind beispielsweise Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid, Dibutylzinnoxid, Zinn(II)-carboxylate; Stannoxane wie Laurylstannoxan; oder Bismutverbindungen wie Bismut(III)-octoat, Bismut(III)-neodecanoat oder Bismut(III)-oxinate.
Geeignete tertiäre Amine sind beispielsweise 2,2'-Dimorpholinodiethylether und andere Morpholinether-Derivate, 1,4-Diazabicyclo[2.2.2]octan und 1,8-Diazabicyclo[5.4.0]undec-7-en.
Ebenso kann die Heissschmelzklebstoffzusammensetzung Mischungen der genannten Katalysatoren enthalten. Besonders geeignet sind dabei Mischungen von Metallverbindungen und tertiären Aminen.

Gegebenenfalls enthält die vorgängig beschriebene Heissschmelzklebstoffzusammensetzung Reaktivverdünner oder Vernetzer, beispielsweise Oligomere oder Polymere von Diisocyanaten wie MDI, PMDI, TDI, HDI, 1,12-Dodecamethylendiisocyanat, Cyclohexan-1,3- oder Cyclohexan-1,4-diisocyanat, IPDI, Perhydro-2,4'- und Perhydro-4,4'-diphenylmethandiisocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Polyisocyanaten mit kurzkettigen Polyolen, sowie Adipinsäuredihydrazid und andere Dihydrazide.
Weiterhin kann die vorgängig beschriebene Heissschmelzklebstoffzusammensetzung andere Zusätze enthalten. Dies sind insbesondere Füllstoffe, Weichmacher, Haftvermittler, insbesondere Silangruppen enthaltende Verbindungen wie beispielsweise Epoxysilane, Vinylsilane, (Meth)acrylsilane, Isocyanatosilane, Carbamatosilane und S-(Alkylcarbonyl)-mercaptosilane, sowie oligomere Formen dieser Silane, UV-Absorptionsmittel, UV- oder Wärmestabilisatoren, Antioxidantien, Flammschutzmittel, optische Aufheller, Pigmente, Farbstoffe und Trocknungsmittel, sowie weitere üblicherweise in Isocyanatgruppen aufweisende Zusammensetzungen eingesetzte Substanzen.

Die vorgängig beschriebene Heissschmelzklebstoffzusammensetzung wird unter Ausschluss von Feuchtigkeit hergestellt und aufbewahrt. In einer geeigneten, klimadichten Verpackung oder Anordnung, wie beispielsweise in einem Fass, einem Beutel oder in einer Kartusche, verfügt sie über eine hervorragende Lagerstabilität. Mit den Begriffen "lagerstabil" und "Lagerstabilität" in Zusammenhang mit einer Zusammensetzung wird im vorliegenden Dokument der Sachverhalt bezeichnet, dass die Viskosität der Zusammensetzung bei der Applikationstemperatur bei geeigneter Lagerung in der betrachteten Zeitspanne nicht oder höchstens so stark ansteigt, dass die Zusammensetzung auf die vorgesehene Weise verwendbar bleibt.

Die Verwendung einer Heissschmelzklebstoffzusammensetzung, wie sie vorhergehend beschrieben ist, als Primer für Klebstoffe oder Dichtstoffe oder als Primer für Zusammensetzungen zur Herstellung von Beschichtungen eignet sich insbesondere auf Substraten, welche ausgewählt sind aus der Gruppe bestehend aus Beton, Zement, Mörtel, Backstein, Ziegel, Gips, Naturstein, Asphalt, Metall, Metalllegierung, Holz, Keramik, Glas, Kunststoff, Pulverbeschichtung, Farbe und Lack.

Weiterhin eignet sich die Verwendung einer Heissschmelzklebstoffzusammensetzung, wie sie vorhergehend beschrieben ist, als Primer für Klebstoffe oder Dichtstoffe oder als Primer für Zusammensetzungen zur Herstellung von Beschichtungen, wobei diese Klebstoffe, Dichtstoffe oder Zusammensetzungen zur Herstellung von Beschichtungen vorzugsweise feuchtigkeitshärtende Polyurethanzusammensetzungen, insbesondere einkomponentige Polyurethanzusammensetzungen, sind. Bevorzugt härten diese Polyurethanzusammensetzungen bei Raumtemperatur mittels Feuchtigkeit, typischerweise Luftfeuchtigkeit, aus.
Insbesondere eignet sich die Verwendung einer Heissschmelzklebstoffzusammensetzung, wie sie vorhergehend beschrieben ist, als Primer für feuchtigkeitshärtende Polyurethanzusammensetzungen, welche mindestens ein Silangruppen und/oder Isocyanatgruppen aufweisendes Polyurethanpolymer umfassen.
Meist bevorzugt ist die erfindungsgemässe Verwendung einer Heissschmelzklebstoffzusammensetzung als Primer für Klebstoffe, insbesondere für feuchtigkeitshärtende Polyurethanklebstoffe.

Geeignete Klebstoffe sind beispielsweise unter den Handelsnamen SikaFlex^{®} oder SikaTack^{®} kommerziell erhältlich von der Firma Sika Schweiz AG.
Geeignete Dichtstoffe sind beispielsweise unter dem Handelsnamen SikaFlex^{®} kommerziell erhältlich von der Firma Sika Schweiz AG.
Geeignete Zusammensetzungen zur Herstellung von Beschichtungen sind beispielsweise unter dem Handelsnamen SikaFloor^{®} kommerziell erhältlich von der Firma Sika Schweiz AG.

In einem zweiten Aspekt umfasst die Erfindung ein Verfahren zur Verklebung zweier Substrate **S1** und **S2** umfassend die Schritte
a1) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S1;**
a2) Applizieren eines zweiten Klebstoffs auf die unter ihren Schmelzpunkt abgekühlte Heissschmelzklebstoffzusammensetzung, welche sich auf dem Substrat **S1** befindet;
a3) Kontaktieren des zweiten Klebstoffs mit einem zweiten Substrat **S2**; oder b1) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S1;**
b2) Applizieren eines zweiten Klebstoffs auf die Oberfläche eines zweiten Substrats **S2**;
b3) Kontaktieren des zweiten Klebstoffs mit der unter ihren Schmelzpunkt abgekühlten Heissschmelzklebstoffzusammensetzung, welche sich auf dem Substrat **S1** befindet, innerhalb der Offenzeit des zweiten Klebstoffs; oder
c1) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S1;**
c2) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S2**;
c3) Applizieren eines zweiten Klebstoffs auf die unter ihren Schmelzpunkt abgekühlte Heissschmelzklebstoffzusammensetzung, welche sich auf dem Substrat **S1** befindet und gegebenenfalls auf die unter ihren Schmelzpunkt abgekühlte Heissschmelzklebstoffzusammensetzung, welche sich auf dem Substrat **S2** befindet;
c4) Fügen des mit Heissschmelzklebstoffzusammensetzung und mit einem zweiten Klebstoff beschichteten Substrats **S1** mit dem mit Heissschmelzklebstoffzusammensetzung und gegebenenfalls mit einem zweiten Klebstoff beschichteten Substrat **S2** innerhalb der Offenzeit des zweiten Klebstoffs; oder
d1) Applizieren einer geschmolzenen Heissschmelzklebstoffzusammensetzung, enthaltend mindestens ein Isocyanatgruppen und/oder Silangruppen aufweisendes Polyurethanpolymer, auf mindestens ein zu verklebendes Substrat **S1** und/oder **S2**;
d2) Abkühlen der Heissschmelzklebstoffzusammensetzung unter ihren Schmelzpunkt;
d3) Applizieren eines zweiten Klebstoffs zwischen die Oberflächen der Substrate **S1** und **S2**.

Dabei besteht das zweite Substrat **S2** aus demselben oder aus einem unterschiedlichen Material wie das Substrat **S1.**

Weiterhin umfasst die Erfindung ein Verfahren des Abdichtens oder des Beschichtens eines Substrats **S1** und/oder **S2** umfassend die Schritte
e1) Applizieren einer geschmolzenen Heissschmelzklebstoffzusammensetzung, enthaltend mindestens ein Isocyanatgruppen und/oder Silangruppen aufweisendes Polyurethanpolymer, auf ein Substrat S1 und/oder S2;
e2) Applizieren einer Zusammensetzung zum Abdichten und/oder Beschichten auf die unter den Schmelzpunkt abgekühlte Heissschmelzklebstoffzusammensetzung, welche sich auf dem Substrat **S1** und/oder **S2** befindet.

Als Primer für Klebstoffe, Dichtstoffe oder für Zusammensetzungen zur Herstellung von Beschichtungen kommen insbesondere die vorhergehend beschriebenen Heissschmelzklebstoffzusammensetzungen zum Einsatz.
Für die Wirkungsweise der Heissschmelzklebstoffzusammensetzung als Primer ist es wichtig, dass die Heissschmelzklebstoffzusammensetzung aufschmelzbar ist, das heisst, dass sie bei der Applikationstemperatur eine genügend niedrige Viskosität aufweist um applizierbar zu sein, und dass sie beim Erkalten möglichst schnell eine genügende Festigkeit aufbaut (Anfangsfestigkeit).
Die Heissschmelzklebstoffzusammensetzung wird vorzugsweise bei einer Temperatur im Bereich von 80 °C bis 200 °C, typischerweise von 120 °C bis 160 °C, appliziert, da sie bei diesen Temperaturen eine gut handhabbare Viskosität aufweist. Als gut handhabbare Viskosität wird insbesondere eine Viskosität von 1 bis 50 Pa.s verstanden.

In den Verfahren zur Verklebung sowie im Verfahren des Abdichtens oder des Beschichtens, das heisst in einem der Schritte a1), b1), c1), c2), d1) oder e1), wird die geschmolzene Heissschmelzklebstoffzusammensetzung vorzugsweise in einer Schichtdicke von 10 bis 300 µm, insbesondere von 20 bis 250 µm, bevorzugt von 50 bis 200 µm, auf das Substrat **S1** und/oder **S2** aufgetragen.
Die Heissschmelzklebstoffzusammensetzung wird dabei vorzugsweise mittels Rolle, Rakel, Sprühen oder durch Tauchbeschichten auf das Substrat **S1** und/oder **S2** aufgetragen.

Bei der Applikation kommt die vorgängig beschriebene Heissschmelzklebstoffzusammensetzung in Kontakt mit Feuchtigkeit, insbesondere in Form von Luftfeuchtigkeit. Parallel zur physikalischen Erhärtung infolge Erstarrens der Heissschmelzklebstoffzusammensetzung beim Abkühlen, setzt auch die chemische Vernetzung mit Feuchtigkeit in bekannter Art und Weise ein.
Mit den Begriffen "Vernetzung", "chemische Vernetzung", "Vernetzungsreaktion" wird im gesamten Dokument der durch die chemische Reaktion von Isocyanatgruppen ausgelöste Prozess der Entstehung von hochmolekularen Polyurethan-Kunststoffen bezeichnet, auch dann, wenn dabei kein kovalent verbundenes Netzwerk entsteht. Ist die Vernetzungsreaktion in einer Heissschmelzklebstoffzusammensetzung durch die ganze Masse fortgeschritten, spricht man auch von "Durchhärtung".

In einem weiteren Aspekt umfasst die Erfindung einen Schichtverbundkörper bestehend aus einem Substrat **S1** und/oder einem Substrat **S2**, mindestens einer Heissschmelzklebstoffzusammensetzung, enthaltend mindestens ein Isocyanatgruppen und/oder Silangruppen aufweisendes Polyurethanpolymer, und einer Zusammensetzung **Z**, welche ein zweiter Klebstoff, ein Dichtstoff oder eine Zusammensetzung zur Herstellung von Beschichtungen ist. Dabei grenzt eine Schicht Heissschmelzklebstoffzusammensetzung an mindestens eine Schicht einer Zusammensetzung **Z**. Insbesondere liegt die Schicht einer Heissschmelzklebstoffzusammensetzung zwischen einem Substrat **S1** oder einem Substrat **S2** und einer Zusammensetzung **Z**. Die Zusammensetzung **Z** ist dabei insbesondere eine feuchtigkeitshärtende Polyurethanzusammensetzung. Vorzugsweise sind die Heissschmelzklebstoffzusammensetzung und/oder die Zusammensetzung **Z** zumindest teilweise durch den Einfluss von Wasser ausgehärtet.
Insbesondere ist der Schichtverbundkörper so aufgebaut, dass das Substrat **S1** oder **S2** an die Schicht Heissschmelzklebstoffzusammensetzung angrenzt; dass die Schicht Heissschmelzklebstoffzusammensetzung zusätzlich an eine Schicht der Zusammensetzung **Z** angrenzt; und dass die Schicht der Zusammensetzung **Z** zusätzlich an ein zweites Substrat **S2** oder **S1** angrenzt, wobei zwischen der Schicht der Zusammensetzung **Z** und dem zweiten Substrat **S2** oder **S1** gegebenenfalls eine zweite Schicht der Heissschmelzklebstoffzusammensetzung liegt.

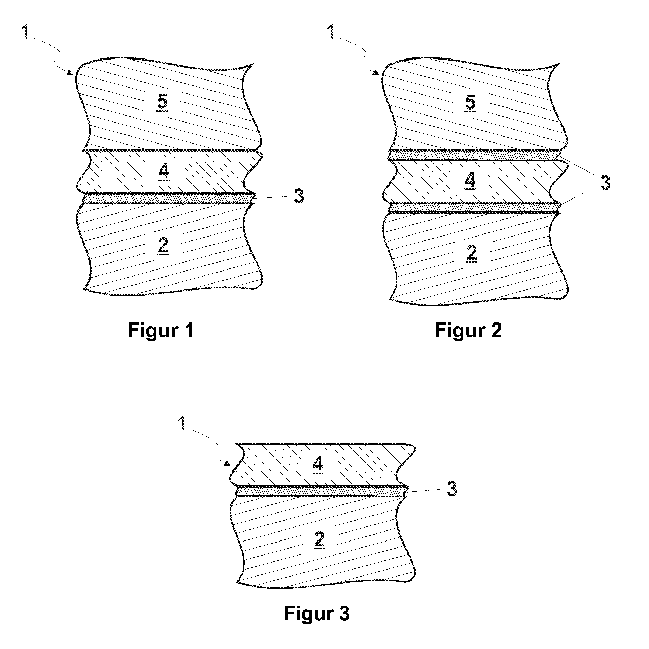

In den Figuren 1 bis 3 sind jeweils Schichtverbundkörper 1, wie sie vorhergehend beschrieben sind, schematisch dargestellt. Gleiche oder gleich wirkende Elemente sind in den verschiedenen Figuren mit den gleichen Bezugszeichen versehen. In den Figuren sind nur die für das unmittelbare Verständnis der Erfindung wesentlichen Elemente gezeigt.
Selbstverständlich ist die Erfindung nicht auf gezeigte und beschriebene Ausführungsbeispiele beschränkt.

Figur 1 zeigt eine erste Ausführungsform eines Schichtverbundkörpers 1, welcher aufgebaut ist aus einer Schicht eines Substrats **S1** 2, die mit einer Schicht einer Heissschmelzklebstoffzusammensetzung 3 versehen ist, auf welcher eine Schicht einer Zusammensetzung **Z** 4 liegt, welche wiederum mit einer Schicht eines Substrats **S2** 5 überdeckt ist. Somit zeigt Figur 1 schematisch zwei Substrate **S1** und **S2**, welche über eine Zusammensetzung **Z** miteinander verklebt sind. Auf dem Substrat **S1** wurde vor der Verklebung eine Schicht einer Heissschmelzklebstoffzusammensetzung als Primer appliziert. Das Substrat S2 wurde in diesem Fall ohne Primer verklebt.
Figur 2 zeigt eine zweite Ausführungsform eines Schichtverbundkörpers, welcher mit der Ausnahme, dass sich zwischen der Schicht der Zusammensetzung **Z** 4 und des Substrats **S2** 5 zusätzlich eine Schicht einer Heissschmelzklebstoffzusammensetzung 3 befindet, gleich ist wie der Schichtverbundkörper aus Figur 1. Figur 2 zeigt somit schematisch zwei Substrate **S1** und **S2,** welche über eine Zusammensetzung **Z** miteinander verklebt wurden, wobei auf beiden Substraten **S1** und **S2** vor der Verklebung je eine Schicht einer Heissschmelzklebstoffzusammensetzung als Primer appliziert wurde.
Figur 3 zeigt eine dritte Ausführungsform eines Schichtverbundkörpers, welcher aufgebaut ist aus einer Schicht eines Substrats **S1** 2, einer darauf liegenden Schicht einer Heissschmelzklebstoffzusammensetzung 3 und einer wiederum darauf liegenden Schicht einer Zusammensetzung **Z** 4. Figur 3 zeigt in dieser Ausführungsform schematisch ein Substrat **S1,** welches mit einem Primer in Form einer Heissschmelzklebstoffzusammensetzung vorbehandelt wurde und anschliessend mit einer Zusammensetzung **Z** beschichtet und/oder abgedichtet wurde.

Weiterhin umfasst die Erfindung einen Artikel, welcher nach einem der vorhergehend beschriebenen Verfahren der Verklebung bzw. des Abdichtens oder des Beschichtens verklebt, abgedichtet und/oder beschichtet wurde.
Bei diesem Artikel handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels.

### Beispiele

Es wurden die folgenden Heissschmelzklebstoffzusammensetzungen verwendet:
***B1:*** SikaMelt^{®} 9670, kommerziell erhältlich bei der Firma Sika Automotive GmbH, Deutschland;
***B2:*** SikaMelt^{®} 9670 + 5 Gew.-% polymeres Diphenylmethandiisocyanat;
***B3:*** SikaMelt^{®} 9670 + 5 Gew.-% polymeres Diphenylmethandiisocyanat + 2 Gew.-% Silquest^{®} A 187, welches kommerziell erhältlich ist von der Firma Momentive Performance Materials Inc., USA.

Die Zusammensetzungen ***B2*** und ***B3*** wurden dadurch hergestellt, dass ***B1*** aufgeschmolzen wurde und dann unter Inertatmosphäre und ständigem Rühren das polymere Diphenylmethandiisocyanat bzw. zusätzlich das Silquest^{®} A 187 zugegeben wurden.

Für die Durchführung der Versuche wurden folgende Substrate verwendet, welche kommerziell erhältlich sind von der Firma Rocholl GmbH, Deutschland:
■ Glasprüfkörper: Floatglas Luftseite (150x100x3 mm);
■ Keramikprüfkörper: VSG-Keramik (175x150x4 mm);
■ Aluminiumprüfkörper: Anodisiertes Aluminium (297x210x0.8 mm);
■ Stahlprüfkörper: DC-04 Stahl (297x210x0.8 mm);
■ PVC-Prüfkörper: PVC weiss (297x210x2 mm).

Die Substrate wurden vor der Applikation mit einem Isopropanol/Wasser-Gemisch (2:1) gereinigt. Die Aluminium- und Stahlprüfkörper wurden vor der Reinigung zusätzlich mit einem Scotch-Brite^{®}, erhältlich von der Firma 3M AG, Schweiz, abgerieben.

Für die Durchführung der Versuche wurde der von der Firma Sika Schweiz AG kommerziell erhältliche Klebstoff SikaTack^{®} Ultrafast verwendet.

### Applikation des Primers

Die Heissschmelzklebstoffzusammensetzungen wurden mit Hilfe einer Rakel in einer Schichtdicke von 50 µm auf die Substrate aufgetragen. Die Applikationstemperatur des Primers betrug dabei 150 °C.

### Klebstoffapplikation und Bestimmung der Haftung

Zur Prüfung der Haftung wurde 5 Minuten nach der Applikation des Primers der Klebstoff (SikaTack^{®} Ultrafast) als Rundraupe mit einer Kartuschenpresse und einer Düse auf die Substrate aufgetragen. Anschliessend wurde der Klebstoff während 7 Tagen bei 23 °C und 50% relativer Luftfeuchtigkeit (Raumtemperatur-Klimalagerung: "*KL*") ausgehärtet und ein Drittel der Raupe wurde mittels dem unten beschriebenen Haftungstest getestet. Danach wurde die Probe während weiteren 7 Tagen ins Wasser bei 23 °C gelegt (Wasserlagerung: "*WL*"). Anschliessend wurde die Haftung durch den Raupentest für ein weiteres Drittel der Raupe getestet. Daraufhin wurden die lackierten Substrate während weiteren 7 Tagen bei 70 °C und 100% relativer Luftfeuchtigkeit (Cataplasma-Lagerung: "*CL*") gelagert und dann wurde die Haftung des letzten Drittels der Raupe ermittelt.
Beim Haftungstest wurden die ausgehärteten Raupen jeweils an einem Ende knapp über der Oberfläche des Plättchens (Klebefläche) eingeschnitten. Das eingeschnittene Ende der Raupe wurde festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde nach jeder entsprechenden Lagerung ein Drittel der Raupe vom Plättchen gezogen bzw. geschnitten. Die Bewertung der Hafteigenschaften erfolgte anhand von der ausgehärteten Zusammensetzung, die nach dem Abziehen der Raupe auf der Substratoberfläche zurückgeblieben war (Kohäsionsbruch), und zwar durch Abschätzen des kohäsiven Anteils der Haftfläche. Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

**Tabelle 1 Haftresultate von SikaTack^{®} Ultrafast auf verschiedenen Substraten, welche mit unterscheidlichten Primern beschichtet sind nach unterschiedlichen Lagerungen.**

| Resultate | | **Haftung** | | |
|---|---|---|---|---|
| **Substrate** | **Primer** | **KL** | **WL** | **CL** |
| Glas | ***Ref.*** (ohne Primer) | 4 | 4 | 5 |
| | ***B1*** | 2 | 2 | 5 |
| | ***B2*** | 2 | 3 | 2 |
| | ***B3*** | 2 | 2 | 2 |
| Keramik | ***Ref.*** (ohne Primer) | 5 | 5 | 5 |
| | ***B1*** | 3 | 3 | 5 |
| | ***B2*** | 3 | 5 | 2 |
| | ***B3*** | 2 | 3 | 1 |
| Aluminium | ***Ref.*** (ohne Primer) | 5 | 5 | 3 |
| | ***B1 B2*** | 3 | 5 | 5 3 |
| | ***B3*** | 4 | 5 | 2 |
| Stahl | ***Ref.*** (ohne Primer) | 3 | 3 | 5 |
| | ***B1*** | 3 | 5 | 4 |
| | *B2* | 4 | 5 | 4 |
| | ***B3*** | 2 | 5 | 3 |
| PVC | ***Ref.*** (ohne Primer) | 5 | 5 | 5 |
| | ***B1*** | 3 | 3 | 5 |
| | ***B2*** | 3 | 4 | 4 |
| | ***B3*** | 3 | 4 | 5 |

**Bezugszeichenliste**

| | |
|---|---|
| 1 Schichtverbundkörper | 4 Zusammensetzung **Z** |
| 2 Substrat **S1** | 5 Substrat **S2** |
| 3 Heissschmelzklebstoffzusammensetzung | |

## Patentansprüche

1. Verwendung einer Heissschmelzklebstoffzusammensetzung, enthaltend mindestens ein Isocyanatgruppen aufweisendes und/oder Silangruppen aufweisendes Polyurethanpolymer, als Primer für Klebstoffe oder Dichtstoffe oder als Primer für Zusammensetzungen zur Herstellung von Beschichtungen.

2. Verwendung gemäss Anspruch 1 als Primer für Substrate, welche ausgewählt sind aus der Gruppe bestehend aus Beton, Zement, Mörtel, Backstein, Ziegel, Gips, Naturstein, Asphalt, Metall, Metalllegierung, Holz, Keramik, Glas, Kunststoff, Pulverbeschichtung, Farbe und Lack.

3. Verwendung gemäss einem der vorhergehenden Ansprüche, **dadurch gekennzeichnet, dass** die Klebstoffe, Dichtstoffe oder die Zusammensetzungen zur Herstellung von Beschichtungen feuchtigkeitshärtende Polyurethanzusammensetzungen, insbesondere einkomponentige Polyurethanzusammensetzungen, welche bei Raumtemperatur mittels Luftfeuchtigkeit aushärten, sind.

4. Verwendung gemäss Anspruch 3, **dadurch gekennzeichnet, dass** die feuchtigkeitshärtende Polyurethanzusammensetzungen mindestens ein Silangruppen und/oder Isocyanatgruppen aufweisendes Polyurethanpolymer umfassen.

5. Verwendung gemäss einem der vorhergehenden Ansprüche als Primer für Klebstoffe, insbesondere für feuchtigkeitshärtende Polyurethanklebstoffe.

6. Verwendung gemäss einem der vorhergehenden Ansprüche, **dadurch gekennzeichnet, dass** die Heissschmelzklebstoffzusammensetzung weniger als 5 Gew.-%, insbesondere 0 bis 2 Gew.-%, bevorzugt 0 bis 1 Gew.-%, meist bevorzugt 0 Gew.-%, jeweils bezogen auf das Gesamtgewicht der Heissschmelzklebstoffzusammensetzung, an organischen Verbindungen aufweist, welche einen Siedepunkt von kleiner als 250°C bei Normdruck oder einen Dampfdruck von grösser als 0.1mbar bei 20°C besitzen.

7. Verfahren zur Verklebung umfassend die Schritte
a1) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S1;**
a2) Applizieren eines zweiten Klebstoffs auf die unter ihren Schmelzpunkt abgekühlte Heissschmelzklebstoffzusammensetzung, welche sich auf dem Substrat **S1** befindet;
a3) Kontaktieren des zweiten Klebstoffs mit einem zweiten Substrat **S2**; oder
b1) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S1;**
b2) Applizieren eines zweiten Klebstoffs auf die Oberfläche eines zweiten Substrats **S2**;
b3) Kontaktieren des zweiten Klebstoffs mit der unter ihren Schmelzpunkt abgekühlte Heissschmelzklebstoffzusammensetzung, welche sich auf dem Substrat **S1** befindet, innerhalb der Offenzeit des zweiten Klebstoffs; oder
c1) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S1;**
c2) Applizieren einer geschmolzenen Heissschmelzklebstoffzusammensetzung, enthaltend mindestens ein Isocyanatgruppen und/oder Silangruppen aufweisendes Polyurethanpolymer, auf ein zu verklebendes Substrat **S2;**
c3) Applizieren eines zweiten Klebstoffs auf die unter ihren Schmelzpunkt abgekühlte Heissschmelzklebstoffzusammensetzung, welche sich auf dem Substrat **S1** befindet und gegebenenfalls auf die unter ihren Schmelzpunkt abgekühlte Heissschmelzklebstoffzusammensetzung, welche sich auf dem Substrat **S2** befindet;
c4) Fügen des mit Heissschmelzklebstoffzusammensetzung und mit einem zweiten Klebstoff beschichteten Substrats **S1** mit dem mit Heissschmelzklebstoffzusammensetzung und gegebenenfalls mit einem zweiten Klebstoff beschichteten Substrat **S2** innerhalb der Offenzeit des zweiten Klebstoffs; oder
d1) Applizieren einer geschmolzenen Heissschmelzklebstoffzusammensetzung, enthaltend mindestens ein Isocyanatgruppen und/oder Silangruppen aufweisendes Polyurethanpolymer, auf mindestens ein zu verklebendes Substrat **S1** und/oder **S2**;
d2) Abkühlen der Heissschmelzklebstoffzusammensetzung unter ihren Schmelzpunkt;
d3) Applizieren eines zweiten Klebstoffs zwischen die Oberflächen der Substrate **S1** und **S2**;
wobei das zweite Substrat **S2** aus demselben oder einem unterschiedlichen Material wie das Substrat **S1** besteht.

8. Verfahren des Abdichtens oder des Beschichtens eines Substrats **S1** und/oder **S2** umfassend die Schritte
e1) Applizieren einer geschmolzenen Heissschmelzklebstoffzusammensetzung, enthaltend mindestens ein Isocyanatgruppen und/oder Silangruppen aufweisendes Polyurethanpolymer, auf ein Substrat **S1** und/oder **S2**;
e2) Applizieren einer Zusammensetzung zum Abdichten und/oder Beschichten auf die unter ihren Schmelzpunkt abgekühlte Heissschmelzklebstoffzusammensetzung, welche sich auf dem Substrat **S1** und/oder **S2** befindet.

9. Verfahren gemäss einem der Ansprüche 7 oder 8, **dadurch gekennzeichnet, dass** die Heissschmelzklebstoffzusammensetzung, enthaltend mindestens ein Isocyanatgruppen und/oder Silangruppen aufweisendes Polyurethanpolymer in einem der Schritte a1), b1), c1), c2), d1) oder e1) in einer Schichtdicke von 10 bis 300 µm, insbesondere von 20 bis 250 µm, bevorzugt von 50 bis 200 µm, auf das Substrat **S1** und/oder **S2** aufgetragen wird.

10. Verfahren gemäss einem der Ansprüche 7 bis 9, **dadurch gekennzeichnet, dass** die Heissschmelzklebstoffzusammensetzung, enthaltend mindestens ein Isocyanatgruppen und/oder Silangruppen aufweisendes Polyurethanpolymer mittels Rolle, Rakel, Sprühen oder durch Tauchbeschichten auf das Substrat **S1** und/oder **S2** aufgetragen wird.

11. Schichtverbundkörper (1) bestehend aus einem Substrat **S1** (2) und/oder einem Substrat **S2** (5), einer Heissschmelzklebstoffzusammensetzung (3), enthaltend mindestens ein Isocyanatgruppen und/oder Silangruppen aufweisendes Polyurethanpolymer, und einer Zusammensetzung **Z** (4), welche ein zweiter Klebstoff, ein Dichtstoff oder eine Zusammensetzung zur Herstellung von Beschichtungen ist, **dadurch gekennzeichnet, dass** eine Schicht Heissschmelzklebstoffzusammensetzung an mindestens eine Schicht einer Zusammensetzung **Z** angrenzt.

12. Schichtverbundkörper (1) gemäss Anspruch 11, **dadurch gekennzeichnet, dass** die Schicht Heissschmelzklebstoffzusammensetzung (3) zwischen einem Substrat **S1** (2) oder einem Substrat **S2** (5) und einer Zusammensetzung **Z** (4) liegt, welche eine feuchtigkeitshärtenden Polyurethanzusammensetzung ist.

13. Schichtverbundkörper (1) gemäss einem der Ansprüche 11 oder 12, **dadurch gekennzeichnet, dass** die Heissschmelzklebstoffzusammensetzung (3) und/oder die Zusammensetzung **Z** (4) zumindest teilweise durch den Einfluss von Wasser ausgehärtet sind.

14. Schichtverbundkörper (1) gemäss einem der Ansprüche 11 bis 13, **dadurch gekennzeichnet, dass** das Substrat **S1** (2) oder **S2** (5) an die Schicht Heissschmelzklebstoffzusammensetzung (3) angrenzt; dass die Schicht Heissschmelzklebstoffzusammensetzung zusätzlich an eine Schicht der Zusammensetzung **Z** (4) angrenzt; und dass die Schicht der Zusammensetzung **Z** zusätzlich an ein zweites Substrat **S2** oder **S1** angrenzt, wobei zwischen der Schicht der Zusammensetzung **Z** und dem zweiten Substrat **S2** oder **S1** gegebenenfalls eine zweite Schicht der Heissschmelzklebstoffzusammensetzung (3) liegt.

15. Artikel welcher nach einem Verfahren gemäss einem der Ansprüche 7 bis 10 verklebt, abgedichtet oder beschichtet wurde.

16. Artikel nach Anspruch 15, **dadurch gekennzeichnet, dass** der Artikel ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels ist.
